# EUROPEAN PATENT APPLICATION

(11) **EP 0 899 081 A1**
(43) Date of publication of application: **03.03.1999**
(21) Application number: 98115976.7
(22) Date of filing: 25.08.1998
(51) Int. Cl.: B29C 47/88, B29C 33/04

(54) **Apparatus and process for manufacturing a sheet of a thermoplastic resin**

(30) Priority: 25.08.1997 JP 228000/97; 07.11.1997 JP 305803/97; 02.03.1998 JP 49382/98; 30.06.1998 JP 184266/98
(71) Applicant: Idemitsu Petrochemical Co., Ltd., Tokyo 108-0014 (JP)
(72) Inventor: Fujii, Atsushi, Sodegaura-shi, Chiba, 299-0205 (JP); Funaki, Akira, Sodegaura-shi, Chiba, 299-0205 (JP); Kubo, Masahiro, Sodegaura-shi, Chiba, 299-0205 (JP); Teragaki, Junichi, Sodegaura-shi, Chiba, 299-0205 (JP); Matsuzawa, Kouzaburo, Adachi-ku, Tokyo, 120-0013 (JP)
(74) Representative: Türk, Gille, Hrabal

(57) **Abstract**

At least one of two rolls (10,12) between which an extruded molten thermoplastic resin (26) is pressed and cooled to form a sheet having an appropriate thickness and a glazed surface has a main body having a pair of shafts (14,16) at its opposite ends, respectively, and an elastic metal sleeve (44) surrounding the main body (38) and held airtight by a pair of O-rings (42) fitted therebetween at the ends, respectively, of the main body (38). Each shaft (14) has an axial coolant passage (46) extending into the main body (38), and the main body has a multiplicity of holes (50) each having an inner end (48) connected with the corresponding coolant passage (46) and an outer end opening in the outer surface of the main body for connecting the coolant passages with an airtight space (D) defined between the main body (38) and the sleeve (44).

## Description

### BACKGROUND OF THE INVENTION

### 1. Field of the Invention:

This invention relates to an apparatus and a process for manufacturing a sheet of a thermoplastic resin. More particularly, it intends to reduce the thickness and improve the cooling rate with respect to a sheet passing between rolls. While a film is generally distinguished from a sheet as having a smaller thickness, the term "sheet" as herein used covers a film, too.

### 2. Description of the Related Art:

A sheet of a crystalline thermoplastic resin, such as polypropylene, having a small thickness of, say, 0.1 to 0.5 mm and used to form e.g. a sheet for wrapping food, a blister and a cover is still very difficult to make despite improved machine accuracy and extension technique.

The air-knife and touch-roll processes are known for the manufacture of such a sheet. The air-knife process is, however, difficult to employ successfully for making a product which is satisfactory in luster and transparency.

The touch-roll process is employed for pressing and cooling a molten resin between metal rolls to make a sheet having a lustrous surface. The metal rolls, which are in linear contact with each other, are effective for making a sheet having a thickness of 0.6 mm or larger, but when they are used for making a sheet having a smaller thickness, they are greatly affected by any variation in the conditions of extrusion and give a lower yield of production, since an unevenly lustrous sheet is produced if the rolls are distorted, and since a defective bank is formed if they have too large a nip therebetween.

For achieving these improvements, the conventional touch-roll process employs a combination of a metal roll with a rubber roll.

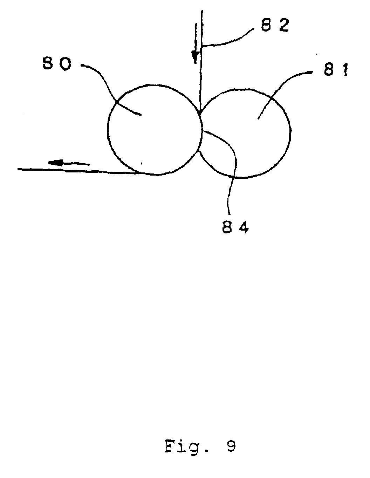

An improved touch-roll process employs a metal roll 80 and a rubber roll 81, as shown in Figure 9. The rolls 80 and 81 are held against a molten resin sheet 82 therebetween, whereby the luster and embossed pattern on the surface of the metal roll 80 are transferred onto the sheet 82. The rubber roll 81 is elastically deformed so that the metal roll 80 and rubber roll 81 may make planar contact with the sheet 82 across an area 84 of contact.

This planar contact enables an effective transfer.

The sheet 82 is, however, roughened in its surface contacting the rubber roll 81. It is also likely that the sheet 82 may be wound on the rubber roll 81 and fail to be separated from it satisfactorily, since the rubber roll 81 has an elevated temperature. Moreover, the rubber roll 81 is unsatisfactory in durability and heat resistance.

We, the inventors of this invention, have developed an elastic roll having a metal surface as described in Japanese Patent Application Laid-Open No. Hei 9-76365. This roll is of the multilayer construction formed by an outer metal cylinder having a small wall thickness, an elastic member, an intermediate tubular member and an inner tubular member in this order from the surface side. If a force bears on the roll, its elastic member is elastically deformed to allow its outer metal cylinder to be deformed, so that the roll may make planar contact with a sheet, as a rubber roll does. Its combination with a metal roll makes it possible to overcome the problems of an unevenly lustrous surface and a defective bank as stated above.

The elastic roll has, however, had a problem of heat dissipation yet to be solved. The elastic member located inwardly of the outer metal cylinder is formed from rubber, and its low heat conductivity prevents any satisfactory diffusion of heat from the roll surface contacting a resin sheet. This problem makes it difficult to realize a high speed and a high efficiency in sheet manufacture.

We have tried to improve the heat conductivity of the elastic member by dispersing a metal powder in rubber, or reducing its wall thickness as far as possible, but have only been able to obtain limited results, since in either event, the elastic member has a smaller allowance for elastic deformation.

### SUMMARY OF THE INVENTION

It is, therefore, an object of this invention to provide an apparatus which can manufacture a sheet of a thermoplastic resin reliably even at a high speed and economically, while retaining the advantages of our previously developed elastic roll so as to make planar contact with a material to be contacted and prevent any surface roughening and adherence thereof. It is another object of this invention to provide a process which is carried out by employing the apparatus of this invention.

The first object of this invention is attained by an apparatus including a pair of rotating cooling rolls for pressing and cooling an extruded molten thermoplastic resin to form a sheet having an appropriate thickness and a glazed surface depending on the surface of the rolls, wherein at least one of the rolls is an elastic roll comprising a main body having a pair of rotary shafts extending from its opposite ends, respectively, and an elastic metal sleeve surrounding the main body, spaced apart from its outer surface and held airtight by a sealing device fitted to the main body at each end thereof, each of the shafts having a coolant passage extending through its center into the main body, and the main body having at least one extending hole, preferably a plurality of radially extending holes each having an inner end connected with one of the coolant passages and an outer end opening in the outer surface of the main body near one end thereof to connect the coolant passages with an airtight space between the main body and the sleeve.

When the rolls are brought into contact with each other, the elastic roll is elastically deformed to make planar contact with the resin, while forcing aside a coolant in the space between the main body of the elastic roll and its sleeve. The temperature of the roll surface raised by its contact with the resin is immediately lowered by the coolant.

One of the coolant passages forms an inlet for the coolant and the other forms its outlet. The coolant may be passed through the space between the main body of the elastic roll and its sleeve by a difference of its pressure from the inlet passage to the outlet passage where it has a lower pressure. In this connection, a pump can, for example, be used to force the coolant into the space.

It is, however, possible that the coolant may leak out through the sealed end portions of the roll around the sealing devices, since it exerts a high, pressure when forced through the roll, and the elastic deformation of the sleeve causes stress having a rapidly changing direction to those sealed end portions.

According to a preferred aspect of this invention, therefore, a source of coolant supply is connected to one of the coolant passages, and a suction device to the other.

The source of coolant supply may, for example, be a tank of cooling water. As a sucking device is connected to the other passage, cooling water does not need to have a particularly high pressure, but may have a pressure of 1 to 10 kg/cm². The sucking device may, for example, be a vacuum pump, or any other device that can create a negative pressure in the other passage.

If the other coolant passage has a negative pressure, the coolant is allowed to flow from the source of coolant supply to the other, or outlet coolant passage through the inlet coolant passage, the holes near one end of the roll, the coolant space between the main body thereof and the sleeve and the holes at the other end. The coolant can be kept at a sufficiently low pressure in the coolant space not to leak through the sealed ends of the roll. The roll does, therefore, not need to have any sophisticated sealing mechanism at either end thereof.

The sealing devices are preferably elastic, though they may be of any other type if they can maintain an airtight space between the main body and the sleeve.

More specifically, the sealing device at each end of the roll preferably comprises a pressure plate provided at each end of the main body and a rubber plate disposed between the pressure plate and the end of the main body elastically deformably by the force of the pressure plate for sealing the open end of the space between the main body and the sleeve. This structure ensures an effective seal against any leakage of the coolant.

The rubber plate is preferably of urethane rubber having a JIS A hardness of less than 30 degrees, and more preferably not exceeding 25 degrees as determined by one of the three JIS K-6301 rubber hardness tests. The use of urethane rubber having such a low level of hardness makes it possible to prevent any coolant leakage completely. If it has a hardness of 30 degrees or higher, it not only fails to provide an effective seal, but also is too hard to be easily deformable for nipping a molten thermoplastic resin, and the sleeve fails to be effectively deformed into contact with the main body, resulting in a defective nip giving a sheet having a defective surface appearance.

The elastic metal sleeve is preferably of the radially multilayered construction, though it may consist solely of a single layer. It may have two or more layers, but preferably has a total wall thickness not exceeding 0.5 mm so as to ensure an improved resistance to fatigue by repeated bending, while remaining elastic.

While a single-layered sleeve is generally likely to crack as a result of its fatigue by bending and thereby cause the coolant to leak if an excessively large nipping force acts upon it, or if a resin sheet has an excessively uneven thickness, a multi-layered sleeve is free from any such problem.

The sleeve is preferably of marageing steel to ensure high strength and toughness, though it may be of any other metal. The marageing steel includes marageing stainless steel containing chromium and having corrosion resistance.

The main body of the elastic roll is preferably surrounded by an elastic layer which is deformable to allow the elastic deformation of the sleeve to a greater extent than is allowed by the width of the coolant space.

The second object of this invention is attained by a process including pressing and cooling an extruded molten thermoplastic resin between a pair of rotating cooling rolls to form a sheet having an appropriate thickness and a glazed surface depending on the surface of the rolls, by employing as at least one of the rolls an elastic roll comprising a main body having a pair of rotary shafts extending from its opposite ends, respectively, and an elastic metal sleeve surrounding the main body, spaced apart from its outer surface and held airtight by a sealing device fitted to the main body at each end thereof, each of the shafts having a coolant passage extending through its center into the main body, and the main body having at least one extending hole, preferably a plurality of radially extending holes each having an inner end connected with one of the coolant passages and an outer end opening in the outer surface of the main body near one end thereof to connect the coolant passages with an airtight space between the main body and the sleeve, and rotating the rolls for nipping the resin therebetween, while passing a coolant through the coolant passages, holes and airtight space, so chat the sleeve may be elastically deformed by resisting the pressure of the coolant to allow the rolls to make planar contact with the resin.

A web of the molten thermoplastic resin passed between the rolls is rapidly cooled to form a sheet, since it has a long nipping distance, and also since the sleeve has a small wall thickness, while the roll is rapidly cooled by the coolant, too. Therefore, the sheet does not adhere to the rolls even if it may be formed at a high speed. Moreover, the elasticity of the elastic roll absorbs any distorsion of the rotary shafts and thereby ensures the manufacture of sheets which are acceptable in quality.

The coolant is preferably supplied through one of the coolant passages, is passed through the airtight space between the main body of the elastic roll and its sleeve, and is drawn out through the other coolant passage.

The coolant preferably has a pressure of 1 to 10 kg/cm² in the airtight space so as to flow effectively through one of the passages, the holes near one end of the roll, the airtight space, the holes near the other end and the other passage.

The coolant pressure as stated is sufficiently low to ensure that no leakage occur through the sealed ends of the roll even if no sophisticated sealing mechanism may be employed therefor.

The sealing devices are preferably elastic, and more specifically, the sealing device at each end of the roll preferably comprises a pressure plate provided at each end of the main body and a rubber plate disposed between the pressure plate and the end of the main body elastically deformably by the force of the pressure plate for sealing the open end of the space between the main body and the sleeve. The rubber plate is preferably of a urethane rubber having a JIS A hardness of less than 30 degrees, and more preferably not exceeding 25 degrees.

The sleeve is preferably a product of marageing steel having the radially multilayered construction.

Both of the rolls are preferably elastic to provide a still higher cooling efficiency and also twice as high a level of working flexibility owing to twice as large an allowance for elastic deformation.

### BRIEF DESCRIPTION OF THE DRAWINGS

Figure 1 is a schematic illustration of an apparatus according to a first embodiment of carrying out this invention;
Figure 2 is a top plan view, partly in section, of an elastic roll employed in the apparatus of Figure 1;
Figure 3 is an exploded perspective view of the elastic roll shown in Figure 2;
Figure 4(a) is a sectional view taken along the line IV-IV of Figure 1, and showing how the elastic roll functions during the manufacture of a sheet;
Figure 4(b) is a view similar to Figure 4(a), but showing a different situation;
Figure 5 is a view similar to Figure 4(a), but showing a second embodiment of carrying out this invention in which two elastic rolls are employed;
Figure 6 is a view similar to Figure 1, but showing an apparatus according to a third embodiment of carrying out this invention;
Figure 7 is a longitudinal sectional view of a different form of elastic roll having a different form of sealing mechanism;
Figure 8 is a view similar to Figure 7, but showing a different form of elastic roll having a different form of elastic metal sleeve; and
Figure 9 is a diagrammatic illustration of a known apparatus.

### DESCRIPTION OF THE PREFERRED EMBODIMENTS

A few preferred embodiments of carrying out this invention will now be described in detail with reference to the drawings.

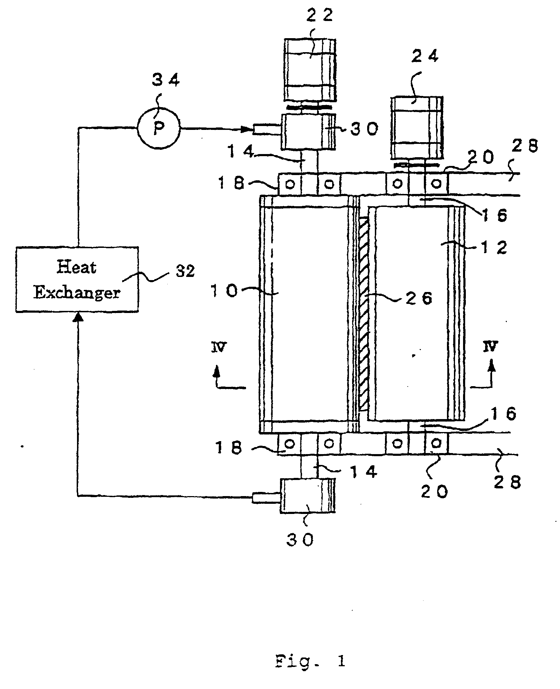

Reference is first made to Figures 1 to 3 showing an apparatus according to a first embodiment of carrying out this invention. The apparatus has a pair of cooling rolls 10 and 12 which are rotatable to press and cool a molten thermoplastic resin extruded from a T-die (not shown) to form a sheet having an appropriate thickness and a glazed surface produced on both sides by the surfaces of the rolls 10 and 12.

One of the rolls 10 and 12 is an elastic roll 10 representing a salient feature of this invention, while the other 12 is an ordinary metal roll. Each of the rolls 10 and 12 has a pair of rotary shafts 14 or 16 extending from its opposite ends, respectively, and supported rotatably by bearings 18 or 20. One of the rotary shafts 14 and one of the rotary shafts 16 project from the bearings 18 and 20, respectively, and are connected to drive motors 22 and 24, respectively, which are adapted for rotating the shafts 14 and 16 and thereby the two rolls 10 and 12 in opposite directions. It is needless to say that a single motor may alternatively be associated with the two shafts for rotating them and thereby the two rolls 10 and 12 in the opposite directions. The bearings 20 for the shafts 16 of the roll 12 are slidable along guides 28 for adjusting the nip pressure.

The rotary shafts 14 of the elastic roll 10 are hollow, and are each connected to a heat exchanger 32 by a rotary joint 30. A pump 34 is installed in a pipeline extending from the heat exchanger 32 to the rotary joint 30 on one of the shafts 14 for circulating a coolant through the elastic roll 10, so that the coolant heated by the roll 10 may be cooled by the heat exchanger 32, and recirculated into the roll 10.

Thus, the coolant is circulated in a closed loop defined by the elastic roll 10, heat exchanger 32, and pump 34. If water is, for example, used as the coolant, however, it is needless to say that the coolant may alternatively be caused to flow along an open loop from one end of the roll 10 to the other.

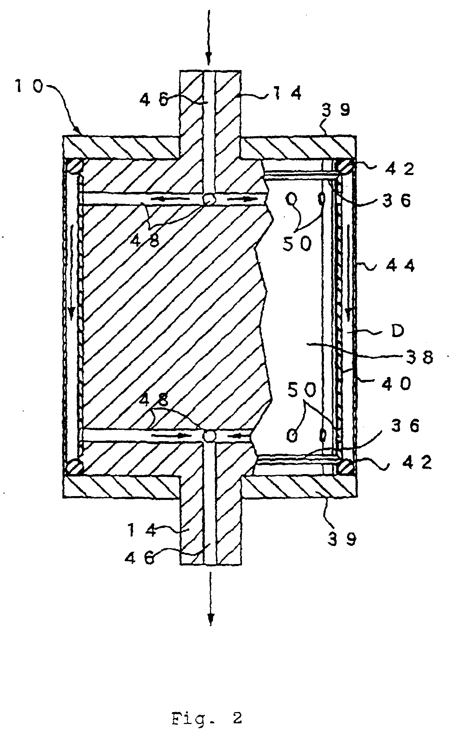

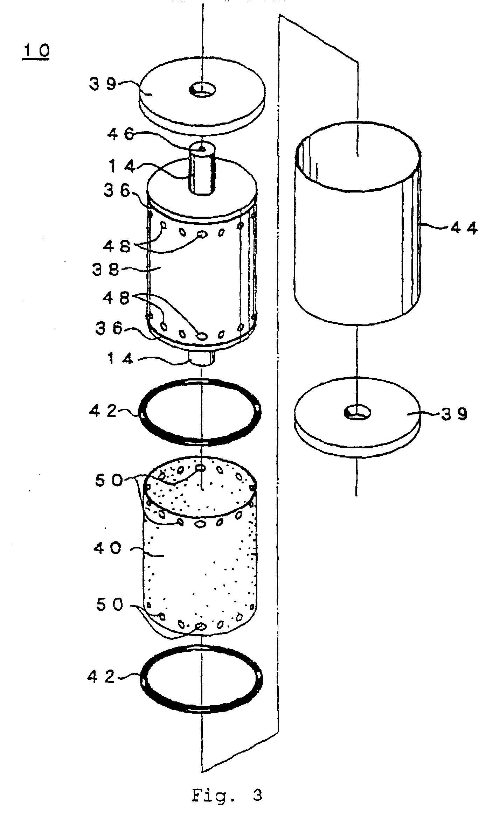

The elastic roll 10 comprises a solid cylindrical main body 38 made of a metal having a pair of annular protrusions 36 formed on its outer surface adjacent to its opposite ends, respectively, as its integral parts, while each of the rotary shafts 14 also forms an integral part of the main body 38 and extends from one of its opposite ends coaxially therewith, a pair of end plates 39 which are slightly larger in diameter than the main body 38 and are each secured to one of its opposite ends by screws, or the like, an elastic cylinder 40 fitted about the main body 38 between its protrusions 36 as an elastic layer covering its outer surface, a pair of O-rings 42 each fitted about the main body 38 between one of its protrusions 36 and one of the end plates 39 as an elastic sealing device, and an elastic metal sleeve 44 having a pair of ends fitted airtightly about the O-rings 42, respectively, and having an inside diameter equal to the outside diameter of the end plates 39 and a small wall thickness, as shown in Figures 2 and 3. The main body 38 and the sleeve 44 define therebetween a cylindrical open space D having a width equal to the thickness of the O-rings 42.

Each rotary shaft 14 has an axially extending coolant passage 46 communicating with the heat exchanger 32 through the rotary joint 30. The coolant passage 46 has an inner end located in the main body 38 and the main body 38 has a multiplicity of radially extending holes 48 formed near one end thereof and each having an inner end connected with the inner end of the coolant passage 46 and an outer end opening in the outer surface of the main body 38, while the elastic cylinder 40 has a multiplicity of holes 50 formed in its wall and aligned with the holes 48, so that the coolant passage 46 may be fluidally connected with the open space D through the holes 48 and 50.

Thus, as shown in Figure 2, the coolant is circulated through the roll 10 by entering the open space D through the coolant passage 46 and the holes 48 and 50 near one end of the roll 10 and leaving it through the holes 48 and 50 and the coolant passage 46 near the other end to cool the sleeve 44.

The sleeve 44 may be any substantially cylindrical member conducting heat, but is preferably formed from a seamless pipe having a small wall thickness.

It may, for example, be formed from a stainless steel (SUS) pipe having a seamless mirror surface having a roughness not exceeding 5S(Rmax = 5µm) if the elastic roll 10 is used for glazing. If the roll 10 is used for embossing, the sleeve 44 may be a cylindrical product made by welding the two opposite edges of an elastrocast nickel plate having an embossed surface.

The sleeve 44 preferably has a wall thickness of 0.1 to 3 mm, and more preferably of 0.3 mm. If its wall thickness exceeds 1 mm, it less easily undergoes elastic deformation, but if its wall thickness is smaller than 0.1 mm, it is expanded by the coolant pressure and fails to maintain its sealing property.

The elastic cylinder 40 and the O-rings 42 are preferably formed from heat-resistant rubber, such as silicone rubber, fluorocarbon rubber, urethane rubber or neoprene rubber, having a JIS A hardness of 40 to 100 degrees, and coolant resistance.

The elastic cylinder 40 is not specifically limited in wall thickness, but it is sufficient for it to have a wall thickness of, say, 10 mm.

Any fluid having a cooling power can be used as the coolant to be circulated through the roll 10, whether it may a gas, or a liquid, and whether it may be compressed, or not.

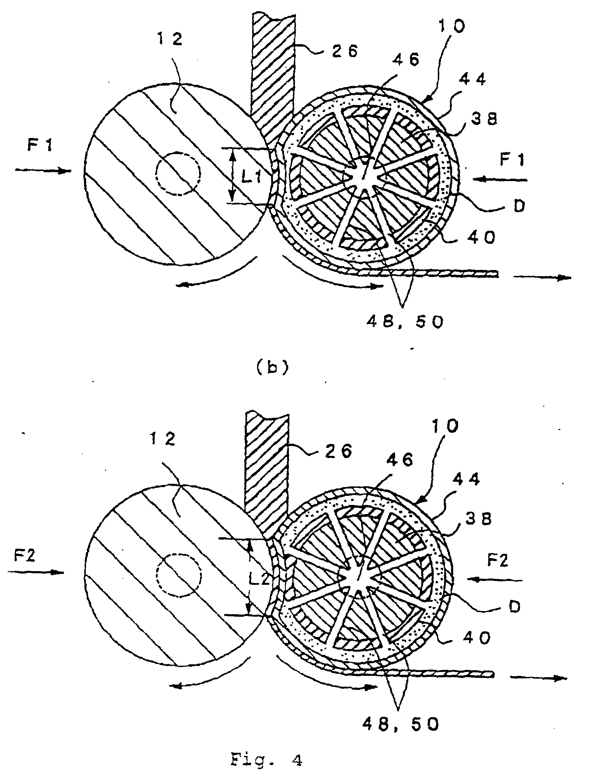

Attention is now directed to Figures 4(a) and 4(b) showing the manufacture of a sheet by the apparatus as described above. Figure 4(a) shows the case in which a nip pressure F1 is applied to hold the rolls 10 and 12 together in pressure contact with a molten web 26 for a resin sheet. The pressure exerted by the roll 12 causes the sleeve 44 of the elastic roll 10 to be depressed by elastic deformation against the force of the O-rings 42 and the pressure of the coolant and thereby make planar contact with the resin sheet 26 in an area defined by the product of the length L1 of its area of contact and the length of the sleeve 44.

The resin sheet 26 is cooled by the coolant, leaves the rolls 10 and 12 rapidly and is conveyed toward a takeup device. As it is relieved from the pressure of the roll 12, the depressed portion of the sleeve 44 gradually recovers its original arcuate contour by virtue of its elasticity, while the heat which it has absorbed from the resin sheet 26 is immediately transferred to the coolant, so that the sleeve 44 may always keep its surface at a sufficiently low temperature to overcome any problem caused by its temperature elevation. Accordingly, the rotating speed of the rolls 10 and 12 can be raised to permit the manufacture of a sheet at a higher speed without yielding any defective product.

Figure 4(b) shows the case in which a higher nip pressure F2 is applied to achieve a larger area of planar contact having a length L2 which is larger than the length L1 of the area of contact shown in Figure 4(a). The sleeve 44 is depressed to a greater extent, as the elastic cylinder 40 is also depressed to give the sleeve 44 a greater allowance for elastic deformation, so that it is possible to make a resin sheet 26 having a smaller thickness.

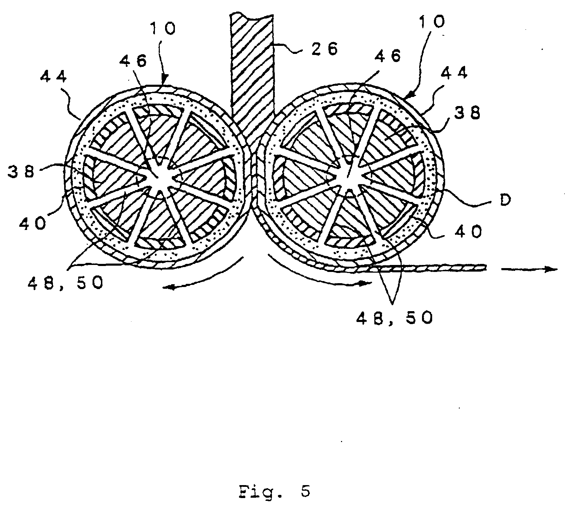

Reference is now made to Figure 5 showing an apparatus according to a second embodiment of carrying out this invention. The apparatus has a pair of elastic rolls each constructed as shown in Figures 2 and 3, and is otherwise identical in construction to the apparatus described above as the first embodiment. Like numerals are, therefore, used to denote like parts throughout the relevant drawings, and no repeated description is made.

As they both have elastically deformable metal sleeves 44, the rolls 10, 10 shown in Figure 5 have a total allowance for elastic deformation which is twice as large as that of the single elastic roll 10 in the apparatus described above, while they also have twice as high a degree of cooling efficiency. The sleeves 44 are flatly deformed, and when they are relieved from pressure, therefore, the deformed portions thereof can smoothly recover their original contours by elasticity. Their greater allowance for elastic deformation makes it possible to apply a more widely varying range of pressure depending on the kind of the resin employed and thereby make sheets having a more widely varying range of thickness.

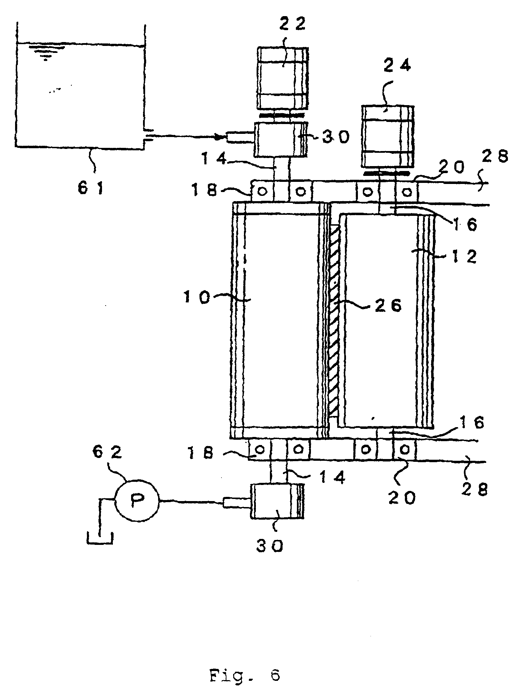

Attention is now directed to Figure 6 showing an apparatus according to a third embodiment of carrying out this invention. The apparatus has a different system for supplying a coolant to an elastic roll and is otherwise identical in construction to the apparatus shown in Figure 1. Like numerals are, therefore, used to denote like parts in the relevant drawings, and no repeated description is made.

In the apparatus of Figure 1, the coolant, which is forced by the pump 34 into the space D between the main body 38 of the elastic roll 10 and its sleeve 44, is likely to have so high a pressure as to leak out through the sealed ends of the roll 10 around the O-rings 42.

The apparatus shown in Figure 6, therefore, has a source 61 of coolant supply connected to one of the coolant passages in the elastic roll 10 and a suction device 62 connected to the other coolant passage. More specifically, the source 61 of coolant supply is connected to the rotary joint 30 attached to one of the rotary shafts 14 (the upper one in Figure 6) having one of the coolant passages 46 and the suction device 62 is connected to the rotary joint 30 attached to the other rotary shaft 14 (the lower one in Figure 6) having the other coolant passage 46.

The source 61 of coolant supply is an appropriately sized tank of cooling water holding an appropriate amount of cooled water. Cooling water is supplied from the tank 61 to the space D through the rotary joint 30 and the coolant passage 46. The tank may alternatively hold water at normal temperature and supply it after cooling by a heat exchanger.

The suction device 62 is a vacuum pump, and creates a negative pressure in the other, or outlet coolant passage 46, so that the coolant in the inlet coolant passage 46 may have a higher pressure and flow through the roll 10. Its suction force is, however, so selected as to maintain a water (coolant) pressure of 1 to 10 kg/cm² in the space D.

This coolant pressure is sufficiently low to ensure that no leakage occur through the sealed ends of the roll 10 even if no sophisticated sealing mechanism may be employed therefor.

Therefore, the apparatus is economical, and has a long life. The water which has been drawn out may be recirculated to the tank 61.

In all of the apparatus described above, the O-rings 42 are employed as sealing members. The O-rings are, however, likely to allow the coolant to leak if an excessively high nip pressure is applied, or if the rolls are rotated at a high speed of 50 m/min. or higher.

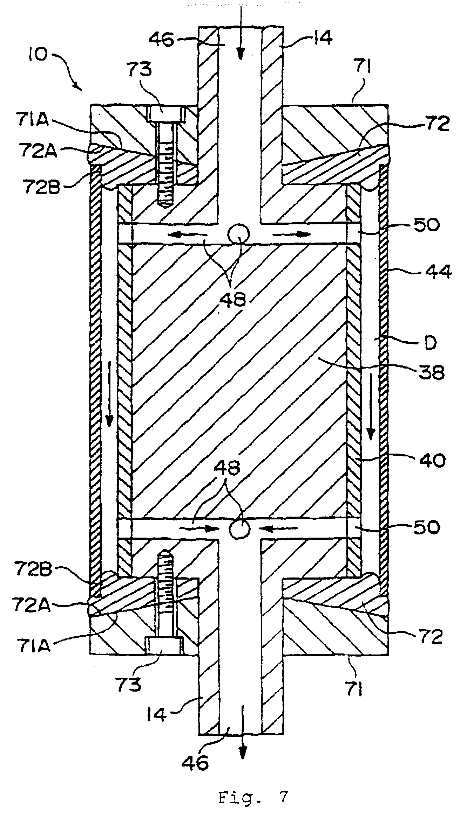

Attention is, therefore, directed to Figure 7 showing a modified form of elastic roll 10. It has a pair of pressure plates 71 provided at the opposite ends, respectively, of its main body 38, and a pair of rubber plates 72 each disposed between one end of the main body 38 and one of the pressure plates 71, the pressure and rubber plates 71 and 72 being secured to the main body 38 by screws 73.

The pressure plates 71 are made of a metallic material, are circular and have an outside diameter which is substantially equal to that of an elastic metal sleeve 44. Each pressure plate 71 has a radially sloping surface 71A contacting the corresponding rubber plate 72 and giving the plate 71 a thickness increasing toward its center.

The rubber plates 72 are of a float-resistant rubber, such as silicone rubber, fluorocarbon rubber, urethane rubber or neoprene rubber, and have a JIS A hardness lower than 30 degrees, and coolant resistance. Urethane rubber having a JIS A hardness lower than 30 degrees, and preferably not exceeding 25 degrees is, among others, useful for making an effective seal. The rubber plates 72 are circular, and have an outside diameter which is substantially equal to that of the sleeve 44. Each rubber plate 72 has a radially sloping surface 72A contacting the radially sloping surface 71A of the corresponding pressure plate 71 and giving the plate 72 a thickness decreasing toward its center. Each rubber plate 72 has an annular shoulder 72B formed along its outer circumference and fitted in the corresponding end of the sleeve 44.

The screws 73 are tightened to hold the pressure plates 71 against the rubber plates 72 to cause the rubber plates 72 to be elastically deformed to seal the opposite ends of the roll 10 between its main body 38 and sleeve 44. The sloping surfaces 71A of the pressure plates 71 exert on the rubber plates 72 both a compressing force acting axially of the roll and a radially outwardly extending force acting radially of the roll to thereby ensure an effective seal against any coolant leakage even during the operation of the rolls at a high speed or under a high nip pressure.

Although in all of the apparatus described above, the elastic metal sleeve (or sleeves) 44 consists of a single layer, it may alternatively be of the radially multilayered construction.

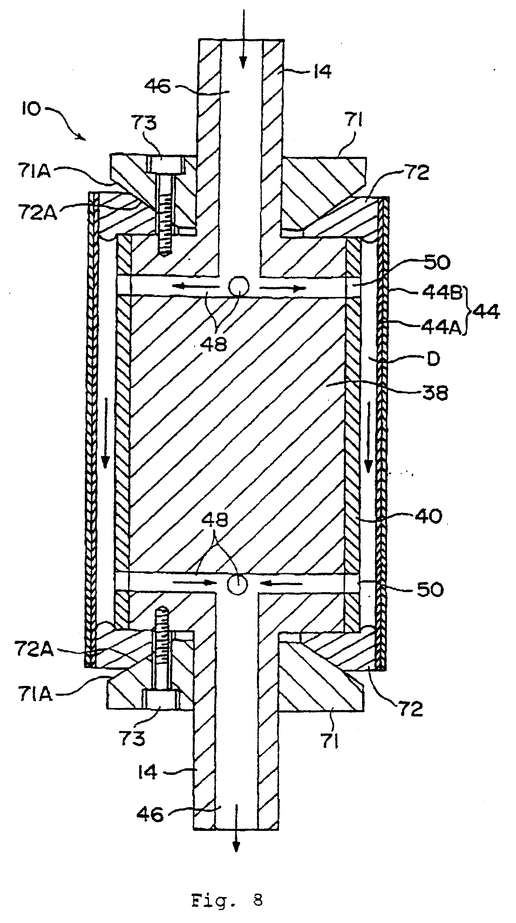

Attention is, therefore, directed to Figure 8 showing by way of example a two-layered sleeve 44 consisting of an inner cylinder 44A and outer cylinder 44B fitted tightly about it. The inner cylinder 44A has an outside diameter which is substantially equal to the inside diameter of the outer cylinder 44B, and the sleeve 44 has a wall thickness not exceeding 0.5 mm.

The two-layered sleeve 44 is preferably made by a process as described in Japanese Patent Application Laid-Open No. Hei 9-267222. A cylindrical seamless body formed from a thin sheet of a metallic material (preferably marageing steel) is fitted about a core, and the core is expanded by heating to have its outer surface held against the inner surface of the cylindrical body. The cylindrical body is cut along its outer surface to form an inner cylinder 44A having an appropriate wall thickness and an appropriate outside diameter and an outer cylinder 44B having an appropriate wall thickness and an appropriate inside diameter (equal to the outside diameter of the inner cylinder 44A), and they are fitted together to make a two-layered sleeve 44.

While a single-layered sleeve is generally likely to crack as a result of its fatigue by bending and thereby cause the coolant to leak if an excessively large nipping force acts upon it, or if a resin sheet has an excessively uneven thickness, a multi-layered sleeve is free from any such problem. It has an improved resistance to fatigue by repeated bending.

The multilayered sleeve 44 does not necessarily need to be of the two-layered construction, but may also consist of three or more layers. Moreover, its layers may be of different metallic materials.

The roll shown in Figure 8 has a sealing mechanism which is basically identical to what is shown in Figure 7, and can be expected to ensure an equally effective seal against any coolant leakage at the sealed ends of the main body 38 of the roll and its sleeve 44 even during the operation of the rolls at a high speed or under a high nip pressure.

The invention will now be described in further detail based on a few specific examples in which it was carried out.

### EXAMPLE 1

An elastic roll was made in accordance with the first embodiment of carrying out the invention.

A main body having a diameter of 150 mm had its surface covered with a layer of silicone rubber having a thickness of 10 mm and a hardness of 45 degrees, coolant passages and holes were drilled in the main body, an O-ring as fitted about the main body at each end thereof, and an elastic metal sleeve was fitted about the O-rings. The sleeve was of stainless steel and had a wall thickness of 0.3 mm, while an open space having a width of 3 mm was formed between the inner surface of the sleeve and the outer surface of the silicone rubber layer.

Water having a pressure of 10 kg/cm² was supplied into one of the coolant passages in the roll to ascertain the absence of any leakage from its open space. Then, the elastic roll was installed with a metal roll in an apparatus for manufacturing a resin sheet as shown in Figure 1. The apparatus was operated under the following conditions:
Resin extruded from a T-die: Polypropylene having a melting point of 161°C, a weight average molecular weight (Mw) of 431,000, a number average molecular weight (Mn) of 65,000 and an MW/Mn ratio of 6.6;
Extrusion temperature: 260°C;
Width of a nip for a molten web: 5 mm;
Coolant: Water having an entering temperature of 15°C and a pressure of 3 kg/cm²;
Sheet-forming speed: 30 m/min. or higher.

There was obtained a highly transparent defect-free sheet having a thickness of 300 µm and presenting a lustrous surface on both sides.

### COMPARATIVE EXAMPLE 1

An elastic roll having the same dimensions as that according to Example 1 was prepared by applying an elastic layer onto the inner surface of an elastic metal sleeve in intimate contact therewith as shown in Japanese Patent Application Laid-Open No. Hei 9-76365. Attempts were made to form a sheet from polypropylene by employing the elastic roll with a metal roll and otherwise repeating Example 1, but in an attempt to make a sheet having a thickness of 300 µm at a speed of 5 m/min. or more, an elevation in roll temperature made it difficult to cool a molten web effectively, and it was confirmed that no sheet having a larger thickness cold be made at any higher speed.

### EXAMPLE 2

An elastic roll was prepared by employing rubber and pressure plates as shown in Figure 7 instead of the O-rings and otherwise repeating Example 1. The rubber plates had a JIS A hardness of 25 degrees. An attempt was made to make a sheet by employing a sheet-forming speed of 50 m/min. and a nip pressure of 50 kg/cm (linear pressure) and otherwise repeating Example 1.

There was obtained a highly transparent defect-free sheet having a thickness of 300 µm and presenting a lustrous surface on both sides without causing any coolant leakage.

### COMPARATIVE EXAMPLE 2

An attempt was made to make a sheet by employing O-rings as employed in Example 1 for sealing and otherwise repeating Example 2, but the coolant was round to leak through the ends of the elastic metal sleeve.

### EXAMPLE 3

Attempts were made to make a sheet by employing the following materials and conditions and otherwise repeating Example 1:
Elastic metal sleeve: A two-layered sleeve made of stainless steel SUS 630, having an outside diameter of 176.6 mm, an inside diameter of 176.0 mm and a length of 1,000 mm, and consisting of an inner cylinder having an outside diameter of 176.30 mm (with a tolerance of +0 to -0.04 mm) and a wall thickness of 0.15mm and an outer cylinder having an inside diameter of 176.30 mm (with a tolerance of +0.04 to -0 mm) and a wall thickness of 0.15 mm;
Sealing mechanism: Rubber and pressure plates as shown in Figure 8 were employed instead of the O-rings. The rubber plates had a JIS A hardness of 25 degrees;
Sheet-forming conditions: A speed of 50 m/min. and a nip pressure of 100 kg/cm (linear pressure).

There was obtained a highly transparent defect-free sheet having a thickness of 300 µm and presenting a lustrous surface on both sides. The sleeve did not reveal any crack or other failure even after 10,000,000 times of rotation.

### COMPARATIVE EXAMPLE 3

An attempt was made to make a sheet by employing a single-layered sleeve and otherwise repeating Example 3. The sleeve revealed small cracks in its portions contacting the edges of the sheet after 2,000,000 times of rotation.

While the invention has been described in detail and with reference to specific embodiments thereof, it will be apparent to one skilled in the art that various changes and modifications can be made therein without departing from the scope and spirit thereof.

## Claims

1. An apparatus for manufacturing a sheet of a thermoplastic resin comprising a pair of rotating cooling rolls for pressing and cooling an extruded molten thermoplastic resin to form a sheet having an appropriate thickness and a glazed surface depending on the surface of the rolls, wherein at least one of the rolls is an elastic roll comprising a main body having a pair of rotary shafts extending from its opposite ends, respectively, and an elastic metal sleeve surrounding the main body, spaced apart from its outer surface and held airtight by a sealing device fitted to the main body at each end thereof, each of the shafts paving a coolant passage extending through its center into the main body, and the main body having at least one extending hole having an inner end connected with one of the coolant passages and an outer end opening in the outer surface of the main body near one end thereof to connect the coolant passages with an airtight space between the main body and the sleeve.

2. An apparatus according to claim 1, further including a source of coolant supply connected with one of said coolant passages and a suction device connected to the other of said coolant passages.

3. An apparatus according to claim 1 or 2, wherein said sealing device is elastic.

4. An apparatus according to claim 1 or 2, wherein said sealing device comprises a pressure plate provided at said each end of said main body, and a rubber plate disposed between said pressure plate and said end of said main body elastically deformably by the pressure of said pressure plate for sealing said airtight space at said end of said main body.

5. An apparatus according to claim 4, wherein said rubber plate is formed from urethane rubber having a JIS A hardness lower than 30 degrees.

6. An apparatus according to any of claims 1 to 5, wherein said sleeve is of the radially multilayered wall construction.

7. An apparatus according to any of claims 1 to 6, wherein said sleeve is made of marageing steel.

8. An apparatus according to any of claims 1 to 7, wherein said main body is surrounded by an elastic layer.

9. A process for manufacturing a sheet of a thermoplastic resin by pressing and cooling an extruded molten thermoplastic resin between a pair of rotating cooling rolls to form a sheet having an appropriate thickness and a glazed surface depending on the surface of the rolls, which comprises employing as at least one of the rolls an elastic roll comprising a main body having a pair of rotary shafts extending from its opposite ends, respectively, and an elastic metal sleeve surrounding the main body, spaced apart from its outer surface and held airtight by a sealing device fitted to the main body at each end thereof, each of the shafts having a coolant passage extending through its center into the main body, and the main body having at least one extending hole having an inner end connected with one of the coolant passages and an outer end opening in the outer surface of the main body near one and thereof to connect the coolant passages with an airtight space between the main body and the sleeve, and rotating the rolls for nipping the resin therebetween, while passing a coolant through said coolant passages, holes and airtight space, so that the sleeve may be elastically deformed by resisting the pressure of the coolant to allow the rolls to make planar contact with the resin.

10. A process according to claim 9, wherein said coolant is introduced into said elastic roll through one of said coolant passages, and drawn out through the other coolant passage after flowing through said airtight space.

11. A process according to claim 10, wherein said coolant has a pressure of 1 to 10 kg/cm² in said airtight space.

12. A process according to any of claims 9 to 11, wherein said sealing device is elastic.

13. A process according to any of claims 9 to 11, wherein said sealing device comprises a pressure plate provided at said each end of said main body, and a rubber plate disposed between said pressure plate and said end of said main body elastically deformably by the pressure of said pressure plate for sealing said airtight space at said end of said main body.

14. A process according to claim 13, wherein said rubber plate is formed from urethane rubber having a JIS A hardness lower than 30 degrees.

15. A process according to any of claims 9 to 14, wherein said sleeve is of the radially multilayered wall construction.

16. A process according to any of claims 9 to 15, wherein said sleeve is made of marageing steel.

17. A process according to claim 9, wherein both of said rolls are elastic.
